# EUROPEAN PATENT SPECIFICATION

(11) **EP 3 426 591 B1**
(45) Date of publication and mention of the grant of the patent: **05.05.2021**
(21) Application number: 17762591.0
(22) Date of filing: 06.03.2017
(51) Int. Cl.: B66C 3/00, B66C 13/06, F16C 11/10

(54) **SHACKLE**
SCHÄKEL
MANILLE D'ASSEMBLAGE

(30) Priority: 10.03.2016 FI 20165202
(43) Date of publication of application: 16.01.2019
(73) Proprietor: Kesmac Oy, 59800 Kesälahti (FI)
(72) Inventor: VALLIUS, Lauri, 80160 Joensuu (FI); KORPELAINEN, Urho, 81260 Ahveninen (FI)
(74) Representative: Kangasmäki, Reijo Holger
(86) International application number: PCT/FI2017/050150
(87) International publication number: WO 2017/153635

(56) References cited:
- EP-A1- 2 455 321
- WO-A1-2009/151365
- US-A- 4 099 762

## Description

The invention relates to a shackle according to the preamble of the independent claim directed thereto.

Shackles are being used for the coupling of an organ that is to be coupled at an end of a boom structure, such as e.g. a rotator and a grip loader coupled therewith, with the boom structure, the organ being driven typically by power transmission transmitted from a hydraulic system of the working machine Document WO 2009151365 discloses the preamble of claim 1 and describes a swing damper with a shackle that can brake and lock the swinging of the organ that is coupled thereupon by actuating brake drums by an internally placed cylinder.

In the international application publication WO 2014/129954 is presented a so called cross-jointed shackle, which is arranged rotatable by joints at opposite ends thereof with respect to two axes of rotation perpendicular to each other. Upper end of the shackle is coupled at an end of a boom unit and lower end thereof with a rotator, wherein in the solution in question hydraulic couplings of the rotator are arranged at opposite sides of the shackle's lower end joint part. The purpose of the solution is to lead hydraulic pipes e.g. of a rotator in connection with the shackle in a protected manner and so that, thanks to being installed at opposite sides of the rotator, they dampen the shackle's swinging motion.

The rotating motion of the type of shackle as described above is thus dampened only by the hydraulic pipes, in which case use of the shackle in practice by locking it in desired positions is practically impossible, which is why the shackle in question, despite enabling protection of the hydraulic pipes, does not have a concrete meaning in practice, but in limited operating purposes.

On the other hand, in the application publication SE 1051216 is presented in a corresponding manner crosslinked shackle with a brake for dampening the swinging of a tool to be used e.g. by a rotator. The solution in question has an actuator arrangement that is arranged to restrict the rotating motion of the shackle's one or both joint shafts by means of a hydraulically operated brake.

This solution is very disadvantageous in practice, because the power needed for braking is at its highest when the power influence is directed to the joint shaft, a consequence of which is a high temperature strain directed to structures of the shackle and in longer-term use deformations and fatigue thereof. Thus, the solution in question does not enable in practical use a very long-lasting shackle particularly for the part of the dampening action of its swinging motion.

It is the aim of the shackle according to the present invention to achieve a decisive improvement to the aforementioned problems and thus to raise essentially the level of prior art in the field. In order to achieve this aim, the the shackle according to the invention is mainly defined by the disclosure of the characterizing part of the independent claim directed thereto.

As the most important advantages of the shackle according to the invention may be mentioned the simplicity of the operating principle and the part entireties thereof as well as the efficiency of the shackle's functioning, thanks to which it is possible to make sure optimal and reliable functioning of the shackle in its operating purpose with as simple constructions and as low use of power as possible in a way, that both dampening of the shackle's swinging motion and locking and releasing thereof are enabled in a totally controllable and stepless manner in all operating positions of the shackle.

The shackle according to the invention comprises an intermediate piece that is coupled with the shackle's in respect with each other separate frame parts and, in which joint shafts, being coupled with the frame parts' joint holes, are coupled with each other by means of an actuator that enables the changing of the mutual distance thereof at its simplest by one hydraulic cylinder to be controlled from the working machine's cabin and to be driven by transmission of the hydraulic system thereof.

The shackle according to the invention thus makes possible a continuous and trouble-free functioning of the working machine, wherein by locking the shackle in a suitable working position, the tool being used in the working can be used in its best possible position at any given time. In this case, the shackle can be rapidly released free to move by a short stroke of the actuator, or arranged, when needed, just to enable dampening of the shackle's swinging motion by fine adjusting the actuator's pressure. One crucial advantage of the invention is also the fact that a friction surface of the shackle according to the invention gets increased along with wearing, when instead in existing solutions the same gets decreased.

Other advantageous embodiments of the shackle according to the invention are presented in the dependent claims directed thereto.

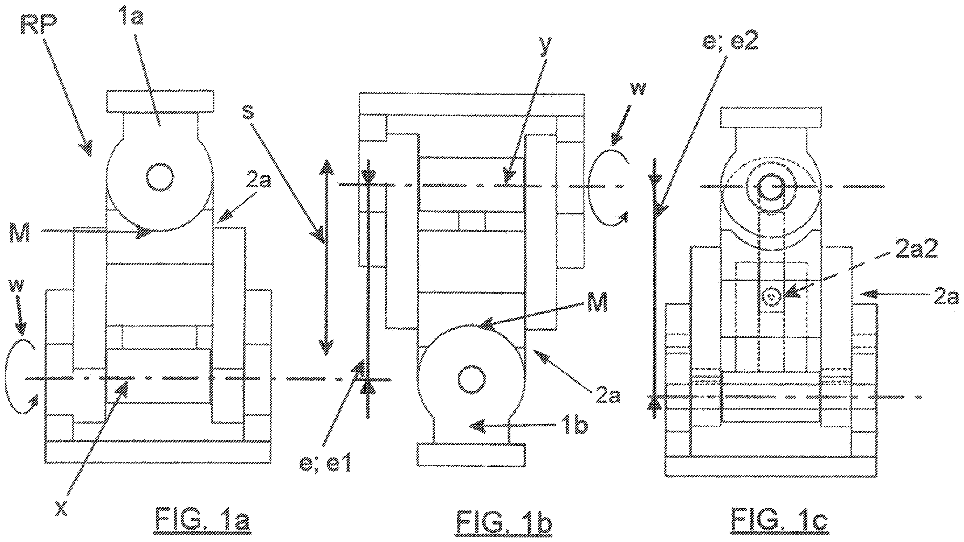

In the following description, the invention is presented in detail in conjunction with the accompanying drawings, in which
figures 1a, 1b and 1c
   show by way of example as a front view and as a side view an advantageous shackle according to the invention, in which the frame parts (figures 1a, 1b) are locked in the longitudinal direction of the shackle, and (figure 1c) released,
figures 2a and 2b
   show as a perspective view and as an enlarged detail view a locked and a released shackle according to the invention at an end of a boom structure to be coupled with a working machine,
figure 3
   shows an explosion view of an advantageous shackle according to the invention, and
figure 4
   show as a perspective view an advantageous shackle according to the invention utilizing part entireties therein that are in common with the boon structure and the organ.

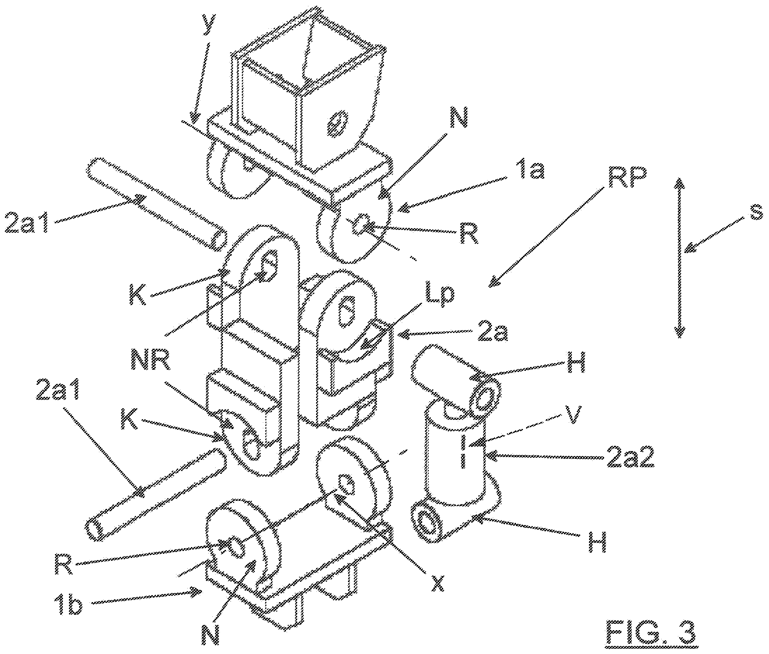

The invention relates to a shackle that is meant to be fastened at an end of a boom structure P, that is to be used by a working machine, in order to couple therewith one or more organs T, such as a rotator, a grip loader and/or the like, to be driven by power transmission transmitted from a hydraulic system of the working machine. The shackle has a frame structure that rotates w around two axes of rotation x, y perpendicular to each other and that is to be fastened by its opposite ends in longitudinal direction s to the boom structure P and to the organ T, and an actuator arrangement 2 that is driven by auxiliary power, advantageously operating by transmission of the working machine's hydraulic system, for dampening/locking of the shackle's swinging and for releasing the same to rotate around its axes of rotation. The shackle's RP actuator arrangement 2 is arranged e.g. with reference to figures 1a and 1c to dampen/lock and to release in respect with each other separate frame parts 1a, 1b of the shackle by changing a mutual distance e of the shackle's axes of rotation x, y, which is made possible especially with reference to figure 3 by means of an intermediate piece 2a that is to be coupled movably in the longitudinal direction s with joint shafts 2a1 existing in joint holes R in the frame parts 1a, 1b, the holes being parallel with the axes of rotation x, y, wherein fastening ears K of the intermediate piece have joint holes NR that are elongated in the longitudinal direction s.

As an advantageous embodiment of the shackle according to the invention, the intermediate piece 2a is coupled with the frame parts' 1a, 1b joint holes R by joint shafts 2a1 that are coupled with each other by means of an actuator 2a2 that enables the changing of the mutual distance e; e1, e2 thereof.
Furthermore as an advantageous embodiment of the shackle according to the invention, the actuator 2a2 comprises a hydraulic cylinder that is coupled between the joint shafts 2a1 rotatively e.g. by sleeve pieces H.

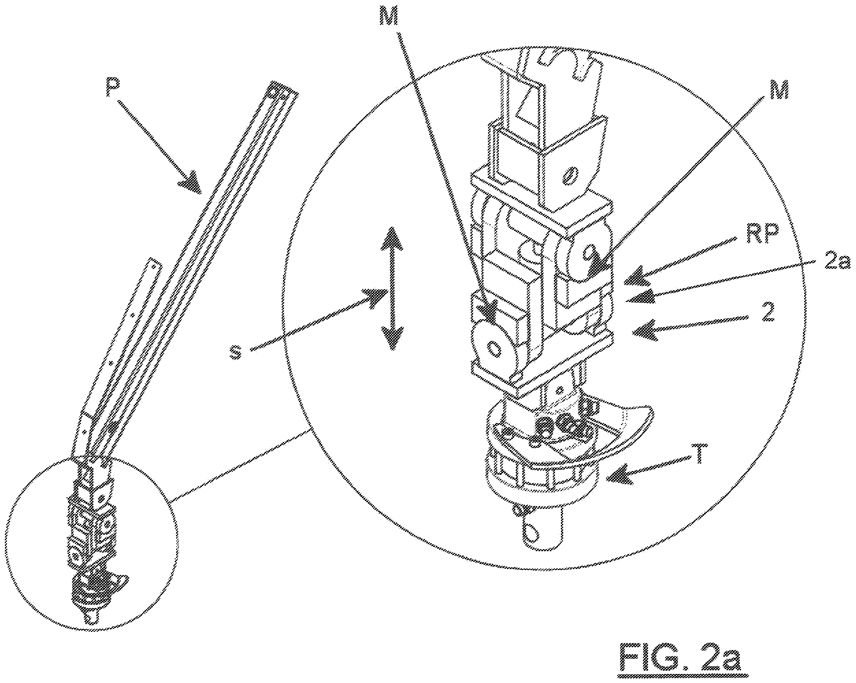

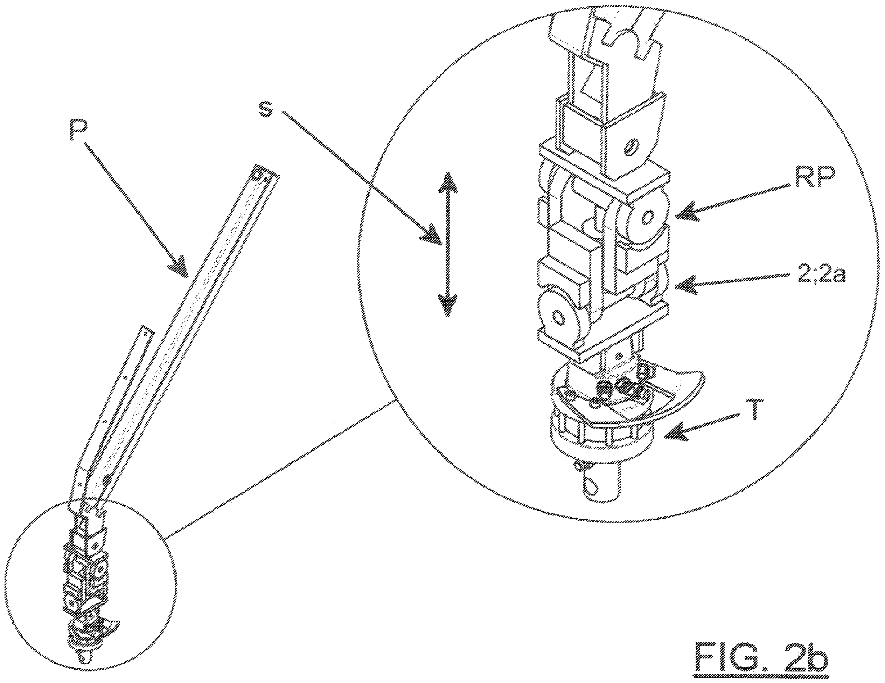

As a further advantageous embodiment of the shackle according to the invention, the locking of the frame parts 1a, 1b is arranged especially with reference to figures 1a-1c and 2a, 2b by mutual form locking arrangements M of joint ears N thereof and the intermediate piece 2a coupled therebetween.

As a further advantageous embodiment of the shackle according to the invention, the form locking arrangements M are arranged by cylindrical surfaces between end surfaces of the frame parts' 1a, 1b joint ears N and the intermediate piece's 2a locking surfaces Lp.

As a further advantageous embodiment of the shackle according to the invention, the locking of the mutual distance e of the frame parts' 1a, 1b axes of rotation x, y is arranged by joint holes NR in the intermediate pieces' fastening ears K that are essentially longer than the actuator's 2a2 stroke length.

When the joint holes in the fastening ears are longer than the actuator's 2a2 stroke length, it is made sure that the locking takes place between the frame parts 1a, 1b thanks to an adequate clearance in the intermediate piece 2a. In this context, a total locking of the shackle is achieved by coupling full pressure with the hydraulic cylinder 2a2, in which case by adjusting its pressure, the dampening of the shackle's swinging motion can be controlled partly to yield as needed, thanks to which device damages e.g. due to sudden powerful impacts can be avoided. The shackle is rapidly releasable in all its operating positions into a fully movable state thanks to the short stroke length of the hydraulic cylinder.

As an advantageous embodiment of the invention, in connection therewith is arranged especially with reference to figure 3 a levelling arrangement V for determining a mass of a load hanging on the shackle.

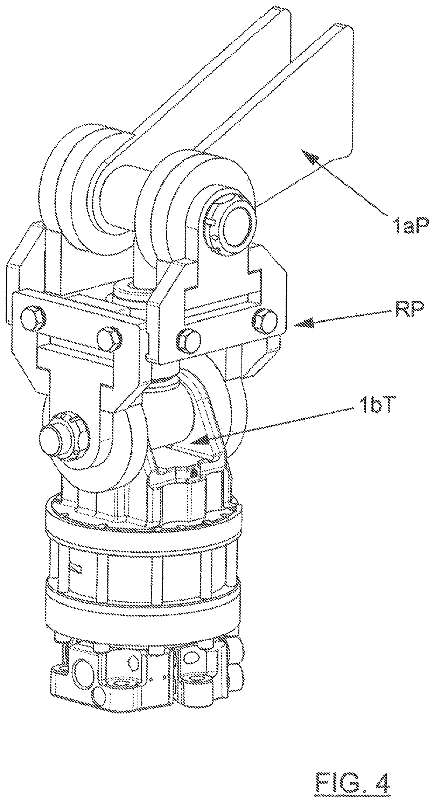

As a further advantageous embodiment of the invention with reference to figure 4, its one or both frame parts 1a, 1b is/are arranged by structural parts 1aP, 1bT that are built-in at the end of the boom structure P and/or in the organ T.

The invention makes possible a very short shackle, having advantageously a length e.g. of ∼370 mm, in which case the needed stroke length of the hydraulic cylinder is correspondingly just about 26 mm.

The embodiments shown in the drawings are exemplary in such respect that instead of the shapes with sharp angles, it is profitable from the point of view of the shackle's strength properties to implement the same for certain parts thereof with rounded shapes.

## Claims

1. Shackle that is meant to be fastened at an end of a boom structure (P) that is, to be used by a working machine, in order to couple therewith one or more organs (T), such as a rotator, a grip loader and/or the like, to be driven by power transmission transmitted from a hydraulic system of the working machine, the shackle having a frame structure that rotates (w) around two axes of rotation (x, y) perpendicular to each other and that is to be fastened by its opposite ends in longitudinal direction (s) to the boom structure (P) and to the organ (T), and an actuator arrangement (2) that is driven by auxiliary power, preferably operating by transmission of the working machine's hydraulic system, for dampening/locking of the shackle's swinging and for releasing the same to rotate around its axes of rotation, **characterized in that**, the shackle's (RP) actuator arrangement (2) is arranged to dampen/lock and to release the rotating motion (w) of in respect with each other separate frame parts (1a, 1b) of the shackle by changing a mutual distance (e) of the shackle's axes of rotation (x, y), which is made possible on the one hand by means of an intermediate piece (2a) that is to be coupled movably in the shackle's longitudinal direction (s) with joint shafts (2a1) existing in joint holes (R) in the frame parts (1a, 1b), the holes being parallel with the axes of rotation (x, y), wherein fastening ears (K) of the intermediate piece have joint holes (NR) that are elongated in the longitudinal direction (s), and on the other hand by mutual form locking arrangements (M) of the separate frame parts (1a, 1b) of the shackle and the intermediate piece (2a).

2. Shackle according to claim 1, **characterized in that**, the intermediate piece (2a) is coupled with the frame parts' (1a, 1b) joint holes (R) by joint shafts (2a1) that are coupled with each other by means of an actuator (2a2) of the actuator arrangement (2) that enables the changing of the mutual distance (e; e1, e2) thereof.

3. Shackle according to claim 2, **characterized in that**, the actuator (2a2) comprises a hydraulic cylinder that is coupled between the joint shafts (2a1) rotatively, such as by sleeve pieces (H).

4. Shackle according to any of the preceding claims 1 - 3, **characterized in that**, the locking of the frame parts (1a, 1b) is arranged by mutual form locking arrangements (M) of joint ears (N) thereof and the intermediate piece (2a) coupled therebetween.

5. Shackle according to claim 4, **characterized in that**, the form locking arrangements (M) are arranged by cylindrical surfaces between end surfaces of the frame parts' (1a, 1b) joint ears (N) and the intermediate piece's (2a) locking surfaces (Lp).

6. Shackle according to any of the preceding claims 1 - 5, **characterized in that**, the locking of the mutual distance (e) of the frame parts' (1a, 1b) axes of rotation (x, y) is arranged by joint holes (NR) in the intermediate pieces' fastening ears (K) that are essentially longer than the actuator's (2a2) stroke length.

7. Shackle according to any of the preceding claims 1 - 6, **characterized in that**, in connection therewith is arranged a levelling arrangement (V) for determining a mass of a load hanging on the shackle.

8. Shackle according to any of the preceding claims 1 - 7, **characterized in that**, its one or both frame parts (1a, 1b) is/are arranged by structural parts (1aP, 1bT) that are built-in at the end of the boom structure (P) and/or in the organ (T).

## Patentansprüche

1. Schäkel, der dazu bestimmt ist, an einem Ende einer von einer Arbeitsmaschine zu verwendenden Auslegerstruktur (P) befestigt zu werden, um mit dieser ein oder mehrere Organe (T), wie einen Rotator, einen Greiflader und/oder dergleichen, zu koppeln, die durch von einem hydraulischen System der Arbeitsmaschine übertragene Kraftübertragung anzutreiben sind, wobei der Schäkel eine sich um zwei zueinander senkrecht stehende Drehachsen (x, y) drehende (w) Rahmenkonstruktion, die mit ihren gegenüberliegenden Enden in Längsrichtung (s) an der Auslegerstruktur (P) und an dem Organ (T) zu befestigen ist, und eine durch Hilfsenergie, vorzugsweise durch Kraftübertragung von einem Hydrauliksystem der Arbeitsmaschine angetriebene Aktuatoranordnung (2) zum Dämpfen/Blockieren des Schwingens des Schäkels und zum Freigeben desselben zum Drehen um seine Drehachsen umfasst, **dadurch gekennzeichnet, dass** die Aktuatoranordnung (2) des Schäkels (RP) so angeordnet ist, dass sie die Drehbewegung (w) von voneinander getrennten Rahmenteilen (1a, 1b) des Schäkels dämpft/blockiert und freigibt, indem sie einen gegenseitigen Abstand (e) der Drehachsen des Schäkels (x, y) verändert, was zum einen durch ein Zwischenstück (2a), das mit Gelenkwellen (2a1) in zu den Drehachsen (x, y) parallelen Verbindungsöffnungen (R) in den Rahmenteilen (1a, 1b) in Schäkellängsrichtung (s) beweglich zu verbinden ist, wobei Befestigungsösen (K) des Zwischenstücks in Längsrichtung (s) verlängerte Verbindungsöffnungen (NR) aufweisen, und zum anderen durch gegenseitige Formschlussanordnungen (M) der getrennten Rahmenteile (1a, 1b) des Schäkels und des Zwischenstücks (2a) ermöglicht wird.

2. Schäkel nach Anspruch 1, **dadurch gekennzeichnet, dass** das Zwischenstück (2a) durch Gelenkwellen (2a1), die mittels eines Aktuators (2a2) der Aktuatoranordnung (2), der die Veränderung des gegenseitigen Abstandes (e; el, e2) derselben ermöglicht, miteinander gekoppelt sind, mit den Verbindungsöffnungen (R) der Rahmenteile (1a, 1b) gekoppelt ist.

3. Schäkel nach Anspruch 2, **dadurch gekennzeichnet, dass** der Aktuator (2a2) einen Hydraulikzylinder umfasst, der zwischen den Gelenkwellen (2a1) beispielsweise durch Hülsenstücke (H) drehbar gekoppelt ist.

4. Schäkel nach einem der vorhergehenden Ansprüche 1 bis 3, **dadurch gekennzeichnet, dass** die Blockierung der Rahmenteile (1a, 1b) durch gegenseitige Formschlussanordnungen (M) ihrer Gelenkösen (N) und dem dazwischen gekoppelten Zwischenstück (2a) erfolgt.

5. Schäkel nach Anspruch 4, **dadurch gekennzeichnet, dass** die Formschlussanordnungen (M) durch zylindrische Flächen zwischen den Endflächen der Gelenkösen (N) der Rahmenteile (1a, 1b) und den Verriegelungsflächen (Lp) des Zwischenstücks (2a) gebildet werden.

6. Schäkel nach einem der vorhergehenden Ansprüche 1 bis 5, **dadurch gekennzeichnet, dass** die Blockierung des gegenseitigen Abstands (e) der Drehachsen (x, y) der Rahmenteile (1a, 1b) durch Verbindungsöffnungen (NR) in den Befestigungsösen (K) der Zwischenstücke erfolgt, die wesentlich länger sind als die Hublänge des Aktuators (2a2).

7. Schäkel nach einem der vorhergehenden Ansprüche 1 bis 6, **dadurch gekennzeichnet, dass** in Verbindung damit eine Ausrichtanordnung (V) zur Bestimmung einer Masse einer am Schäkel hängenden Last angeordnet ist.

8. Schäkel nach einem der vorhergehenden Ansprüche 1 bis 7, **dadurch gekennzeichnet, dass** ein oder beide Rahmenteile des Schäkels (1a, 1b) durch Bauteile (1aP, 1bT) gebildet werden, die am Ende der Auslegerstruktur (P) und/oder im Organ (T) eingebaut sind.

## Revendications

1. Manille d'assemblage destinée à être attachée à une extrémité d'une flèche (P) c'est-à-dire à être utilisée par un engin de travail afin de lui accoupler un ou plusieurs organes (T), tels qu'un rotor, un chargeur à pince et/ou organe similaire, à entraîner par transmission de force issue d'un système hydraulique de l'engin de travail, la manille d'assemblage ayant une structure de cadre qui tourne (w) autour de deux axes de rotation (x, y) perpendiculaires entre eux et qui doit être attaché par ses extrémités opposées dans le sens de la longueur (s) à la flèche (P) et à l'organe (T), et un dispositif d'actionneur (2) entraîné par une force auxiliaire, fonctionnant de préférence par transmission du système hydraulique de l'engin de travail, pour amortir/verrouiller l'oscillation de la manille d'assemblage et pour lui permettre de tourner autour de ses axes de rotation, **caractérisée par le fait que** le dispositif d'actionneur (2) de la manille d'assemblage (RP) est conçu pour amortir/verrouiller et libérer le mouvement de rotation (w) par rapport à chaque autre partie de cadre séparée (1a, 1b) de la manille d'assemblage en modifiant la distance mutuelle (e) des axes de rotation (x, y) de la manille d'assemblage, ce qui est rendu possible d'une part au moyen d'une pièce intermédiaire (2a) à accoupler de manière amovible dans le sens de la longueur de la manille d'assemblage (s) avec des arbres de transmission (2a1) existant dans les trous d'assemblage (R) dans les parties de cadre (1a, 1b), les trous étant parallèles aux axes de rotation (x, y), où les oreilles de fixation (K) de la pièce intermédiaire sont pourvues de trous d'assemblage (NR) allongés dans le sens de la longueur (s), et d'autre part au moyen de dispositifs de verrouillage mutuels de forme (M) des parties de cadre séparées (1a, 1b) de la manille d'assemblage et de la pièce intermédiaire (2a).

2. Manille d'assemblage décrite dans la revendication 1, **caractérisée par le fait que** la pièce intermédiaire (2a) est accouplée aux trous d'assemblage (R) des parties de cadre (1a, 1b) par des arbres de transmission (2al) accouplés entre eux au moyen d'un actionneur (2a2) du dispositif d'actionneur (2) qui en permet le changement de distance mutuelle (e; el, e2).

3. Manille d'assemblage décrite dans la revendication 2, **caractérisée par le fait que** l'actionneur (2a2) comprend un cylindre hydraulique accouplé entre les arbres de transmission (2al) de façon rotative, comme par des manchons (H).

4. Manille d'assemblage décrite dans une quelconque des revendications 1 à 3, **caractérisée par le fait que** le verrouillage des parties de cadre (1a, 1b) est assuré par des dispositifs de verrouillage mutuel de forme (M) de ses oreilles d'assemblage (N) et par la pièce intermédiaire (2a) accouplée entre les deux.

5. Manille d'assemblage décrite dans la revendication 4, **caractérisée par le fait que** les dispositifs de verrouillage de forme (M) sont assurés par des surfaces cylindriques entre les oreilles d'assemblage (N) des surfaces d'extrémité des parties de cadre (1a, 1b) et les surfaces de verrouillage (Lp) de la pièce intermédiaire (2a).

6. Manille d'assemblage décrite dans une quelconque des revendications 1 à 5, **caractérisée par le fait que** le verrouillage de la distance mutuelle (e) des axes de rotation (x, y) des parties de cadre (1a, 1b) est assuré par des trous d'assemblage (NR) dans les oreilles de fixation (K) des pièces intermédiaires dont la longueur est essentiellement supérieure à la longueur de course de l'actionneur (2a2).

7. Manille d'assemblage décrite dans une quelconque des revendications 1 à 6, **caractérisée par le fait qu'**un dispositif de nivelage (V) est disposé pour déterminer la masse d'une charge suspendue à la manille d'assemblage.

8. Manille d'assemblage décrite dans une quelconque des revendications 1 à 7, **caractérisée par le fait que** sa ou ses deux parties de cadre (1a, 1b) est ou sont assurées par des pièces structurelles (1aP, 1bT) intégrées à l'extrémité de la flèche (P) et/ou dans l'organe (T).
